Europäisches Patentamt

European Patent Office

Office européen des brevets

(11) Numéro de publication : **0 209 449 B1**

# (12) FASCICULE DE BREVET EUROPEEN

(45) Date de publication du fascicule du brevet :
**23.01.91 Bulletin 91/04**

(51) Int. Cl.$^5$ : **G02B 26/00, G02B 26/08**

(21) Numéro de dépôt : **86401514.4**

(22) Date de dépôt : **08.07.86**

(54) **Miroir déformable.**

(30) Priorité : **10.07.85 FR 8510578**

(43) Date de publication de la demande :
**21.01.87 Bulletin 87/04**

(45) Mention de la délivrance du brevet :
**23.01.91 Bulletin 91/04**

(84) Etats contractants désignés :
**BE CH DE IT LI SE**

(56) Documents cités :
**DE-A- 3 119 823**
**US-A- 3 254 342**
**US-A- 4 046 462**
**US-A- 4 239 343**
**US-A- 4 266 857**
**US-A- 4 288 146**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Alfille, Jean-Pascal 1, Allée du Nivernais F-92140 Clamart (FR)**
Inventeur : **Noel, Jean-Paul 22, Bis, rue des Grillons F-92290 Chanetay Malabry (FR)**

(74) Mandataire : **Mongrédien, André et al c/o BREVATOME 25, rue de Ponthieu F-75008 Paris (FR)**

## Description

La présente invention a pour objet un miroir déformable. Elle est utilisée notamment comme élément du système optique d'une tête de focalisation d'un faisceau laser.

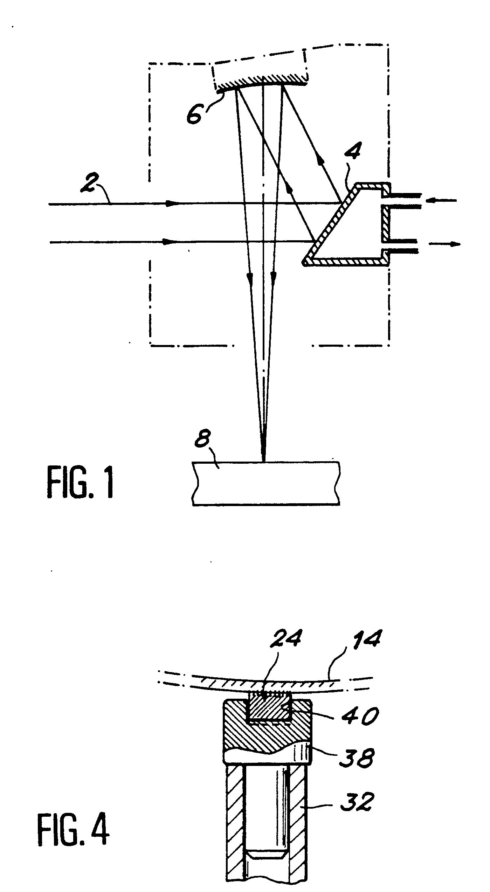

Lorsque des lasers de puissance ($CO_2$, YAG...) sont utilisés par exemple à des fins d'usinage ou de traitement thermique, le faisceau laser incident est focalisé sur le matériau à traiter ou usiner par une tête de focalisation représentée de façon schématique sur la figure 1.

Le faisceau laser 2 est tout d'abord réfléchi par un miroir de renvoi 4, par exemple refroidi par eau, vers un miroir de focalisation 6 ; ce miroir 6 a pour fonction de focaliser le faisceau laser 2 à une distance focale déterminée sur le matériau cible 8, selon une tache focale et une répartition énergétique variables selon les utilisations.

Par exemple, en traitement thermique, il est intéressant de focaliser le faisceau laser selon un segment de droite et suivant une répartition énergétique constante.

Pour faire face à toutes ces utilisations, l'opérateur doit posséder une gamme d'optiques convergentes classiques ainsi que des optiques spéciales pour modifier la répartition énergétique. Il apparaît donc un manque de souplesse gênant et coûteux lorsqu'une large utilisation du laser est demandée.

L'objet de l'invention concerne un miroir de focalisation 6 dont la surface réfléchissante est déformable. Jusqu'à présent, les miroirs déformables sont de trois types principaux. Le premier concerne un miroir dont la surface réfléchissante est constituée par un disque s'appuyant sur un joint torique et soumis à une dépression (voir par exemple le brevet US-4 119 366). On obtient alors un miroir dont la concavité est difficile à maîtriser et délicate à stabiliser. De plus, une contre-courbure du miroir est quasiment impossible à obtenir.

Le second type de miroir déformable (voir par exemple le brevet DE-3 119 823) comporte des actionneurs ponctuels fixés sur un disque réfléchissant de façon à tirer sur celui-ci pour constituer des appuis fixes ou élastiques permettant de modifier localement la forme du miroir. Il est difficile avec un tel système d'avoir une courbure régulière et sans discontinuités de la surface car les appuis sont localisés et fixés rigidement au disque, ce qui introduit des contraintes supplémentaires dans celui-ci. Ceci est d'autant plus vrai lorsqu'il s'agit d'obtenir une surface qui n'est pas symétrique de révolution, par exemple lorsqu'on utilise le laser en traitement thermique.

Le troisième type de miroir déformable comporte une surface réfléchissante dont la forme est déterminée par des couples de torsion (voir par exemple le brevet US-4 043 644). Cette solution permet d'obtenir une courbure régulière de la surface dans le cas où celle-ci est cylindrique. Lorsque cette surface est quelconque, les réglages sont très difficiles à maîtriser et la forme obtenue n'est pas très stable.

L'invention a justement pour objet un miroir déformable permettant de pallier les inconvénients précédemment mentionnés.

Par ailleurs, on connaît par le document US-A-4 239 343 un miroir déformable formé par un disque réfléchissant, s'appuyant sur un bord d'un boîtier pour délimiter un volume clos. Ce boîtier contient des billes, posées sur une plaque piézoélectrique. Une mise en dépression du volume clos permet aux billes d'être en contact à la fois avec le disque et la plaque piézoélectrique. La courbure du miroir déformable est obtenue par l'excitation de la plaque piézoélectrique constituant le fond du boîtier, et par le fait que les billes admettent des légères variations de rayon.

L'objet de l'invention est un miroir formé par un disque mince réfléchissant s'appuyant de façon étanche sur un bord d'un boîtier pour délimiter un volume clos, des moyens étant prévus dans ce volume pour créer une dépression, le boîtier étant muni d'appuis réglables permettant de contrôler la courbure du disque, cette courbure résultant de l'action combinée de la dépression et des appuis réglables.

Selon l'invention, lesdits appuis sont alignés en rangées parallèles d'au moins trois appuis selon une direction déterminée, au moins une poutrelle déformable étant interposée entre le disque et chaque rangée d'appuis pour créer une déformation cylindrique du miroir conduisant à la formation d'une tache focale rectiligne selon une deuxième direction déterminée.

De façon plus précise, lorsque le miroir selon l'invention est utilisé dans une tête de focalisation d'une installation laser, les appuis sont réglés de façon à ce que le disque ait une courbure circulaire suivant chacune des poutrelles et selon ladite direction déterminée permettant d'obtenir une zone focale rectiligne et que dans une direction perpendiculaire à ladite direction, les appuis sont réglés de façon à ce que le disque ait localement au moins une contre-courbure permettant de redistribuer la concentration d'énergie d'un faisceau laser émis par une source laser et focalisé par le miroir.

Commodément, ladite contre-courbure est localisée au centre du disque et la concentration d'énergie redistribuée par le miroir déformable est constante.

De toute façon, l'invention sera mieux comprise en se référant à la description qui suit d'un exemple de mise en oeuvre donné à titre illustratif et non limitatif, en référence aux figures annexées, sur lesquelles :

    – la figure 1, déjà décrite, représente de façon schématique une tête de focalisation d'un faisceau laser ;

    – la figure 2 représente, en perspective et en coupe longitudinale, un exemple de mise en oeuvre du miroir selon l'invention ;

– la figure 3 représente, en coupe longitudinale, le miroir selon l'invention, et plus particulièrement une poutrelle et ses trois appuis réglables ;

– la figure 4 représente, en coupe, la liaison entre une poutrelle et un appui réglable ;

– la figure 5 représente une vue de dessus du miroir selon l'invention ;

– la figure 6 représente, de façon schématique, les courbes de niveau du miroir selon l'invention lorsque la tache focale est un segment de droite et la répartition énergétique est constante ; et

– la figure 7 représente un graphique avec en abscisses la distance d'un point par rapport à l'axe du faisceau laser et en ordonnées l'énergie de ce faisceau.

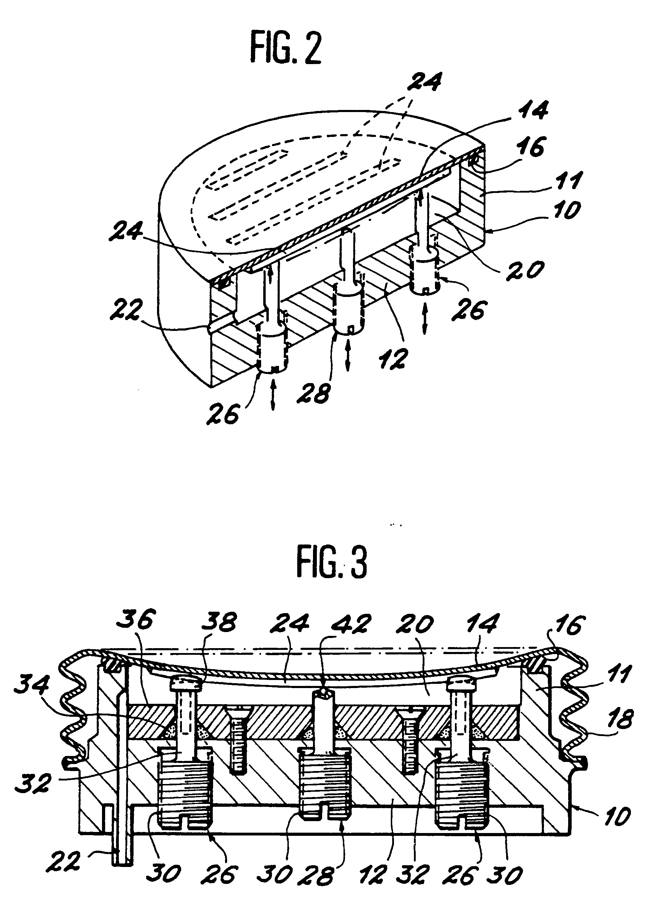

Un exemple de mise en oeuvre du miroir déformable de l'invention est représenté sur les figures 2, 3 et 4.

Le miroir comporte un boîtier 10 possédant une paroi circulaire 11 de forme cylindrique, et un fond plat 12.

Un disque réfléchissant 14 circulaire est appliqué sur le bord de la paroi 11 en regard du fond 12, par l'intermédiaire d'un joint torique 16. Un espace 20 étanche est ainsi formé entre le disque 14 et le boîtier 12. Un soufflet 18 prolonge le disque 14 de façon à ceinturer le boîtier 10 et à solidariser le disque 14 avec le boîtier 10 lorsqu'aucune dépression n'est créée dans l'espace 20.

Un orifice 22, formé dans le boîtier 10, permet de connecter ledit espace 20 avec par exemple une pompe à vide. Lorsqu'une dépression est appliquée dans cet espace 20, le disque 14 se déforme selon un paraboloïde de révolution. Le miroir se comporte alors comme un miroir classique convergent de révolution.

Pour obtenir des focalisations multiples, par exemple selon un segment de droite, des poutrelles 24 parallèles et réglables en hauteur sont appliquées au dos du disque réfléchissant 14.

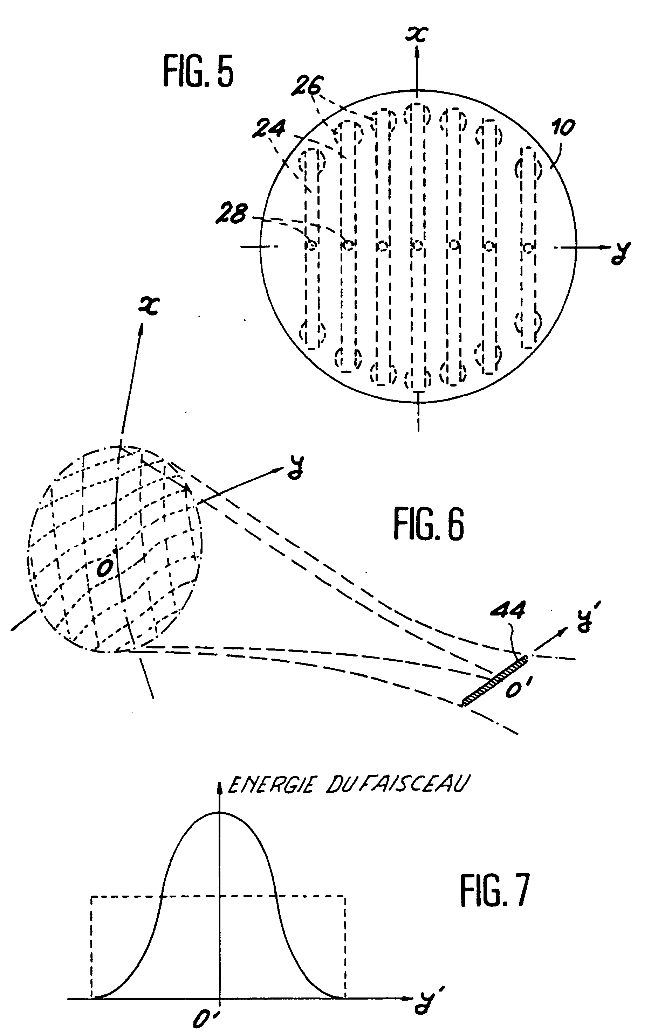

Ces poutrelles 24, élastiques, par exemple au nombre de sept, sont parallèles et disposées symétriquement par rapport à un axe Ox du miroir (voir figure 5).

Chacune de ces poutrelles 24 est déformée sous l'action de trois appuis réglables : deux appuis 26 aux extrémités de la poutrelle 24 et un appui central 28 au milieu de celle-ci. Ces appuis 26, 28 sont constitués par des vis 30 logées dans des filetages formés dans le fond 12 du boîtier 10. Ces vis se prolongent chacune par une tige 32. Un joint 34 entoure chaque tige 32 et se trouve appliqué contre le fond 12 par un flasque 36 lui-même fixé contre ce fond 12, l'étanchéité de l'espace 20 étant ainsi préservée.

Les tiges 32 des appuis 26, 28 possèdent à leur extrémité libre un alésage dans lequel est logée à coulissement une tête 38 dans laquelle est formée une gorge 40 apte à recevoir à coulissement la poutrelle 24 correspondante (figure 4). Une colle élastique déposée entre la gorge 40 de la tête 38 et la poutrelle 24 correspondante permet un maintien élastique de celle-ci.

Il n'y a donc aucun effort de torsion appliqué sur les poutrelles par les appuis 26, 28.

Les tiges 32 des appuis centraux 28 sont munies à leur extrémité libre d'une bille 42 s'appliquant directement sur la poutrelle 24 correspondante.

En jouant sur les réglages des trois appuis 26, 28 d'une poutrelle 24, on peut ainsi obtenir une courbure contrôlée du disque réfléchissant 14. Les poutrelles permettent de répartir les efforts dus aux appuis 26, 28 et ainsi d'obtenir avantageusement une courbure du disque harmonieuse et sans discontinuités gênantes.

De façon générale, le faisceau laser possède à l'émission une répartition gaussienne de son énergie, comme le représente la courbe en trait plein de la figure 7. Or, pour des traitements thermiques par exemple, il est intéressant d'avoir une répartition constante de l'énergie du faisceau, comme le représente la courbe en traits interrompus sur la même figure 7.

Pour obtenir une telle distribution de l'énergie, le miroir selon l'invention est très avantageux.

En effet, comme le représentent schématiquement les courbes de niveau de la figure 6, les appuis 26, 28 sont alors réglés de façon à ce que le disque réfléchissant 14 ait une courbure circulaire suivant chacune des poutrelles 24, c'est-à-dire suivant Ox, permettant d'obtenir une zone focale rectiligne 44. Dans une direction Oy perpendiculaire à Ox, les appuis sont réglés de façon à ce que le disque 14 possède localement une contre-courbure en son centre, permettant d'obtenir une distribution d'énergie constante du faisceau laser focalisé par le miroir.

Pour régler un tel miroir, une méthodologie rationnelle doit être appliquée. En effet, la distance focale, les dimensions de la tache focale et la répartition énergétique sont interdépendants. C'est pourquoi il est nécessaire de régler ces paramètres par ajustages successifs en boucle jusqu'à l'obtention du résultat désiré.

Bien entendu, la description ci-dessus n'a été donnée qu'à titre d'exemple, toutes modifications dans les formes de réalisation peuvent être envisagées sans modifier le principe fondamental de l'invention.

Par exemple le nombre de poutrelles et d'appuis dépend de la taille du miroir et de sa forme qui peut être quelconque. Le nombre d'appuis peut aussi être déterminé par la forme désirée du disque le long d'une poutrelle, par exemple lorsque l'on a besoin de plusieurs contre courbures.

## Revendications

1. Miroir déformable formé par un disque (14) mince réfléchissant s'appuyant de façon étanche sur un bord d'un boîtier (10) comportant un fond plat (12) pour délimiter un volume (20) clos, des moyens étant prévus dans ce volume clos (20) pour créer une dépression, le boîtier (10) étant muni d'appuis (26, 28) réglables en hauteur par rapport au fond plat (12) et permettant de contrôler la courbure du disque (14), cette courbure résultant de l'action combinée de la dépression et du réglage des appuis réglables, lesdits appuis (26, 28) étant alignés en rangées parallèles d'au moins trois appuis selon une première direction déterminée (Ox), caractérisé en ce que au moins une poutrelle (24) déformable est interposée entre ledit disque (14) et chaque rangée d'appuis, pour créer une déformation cylindrique du miroir conduisant à la formation d'une tache focale rectiligne (44) selon une deuxième direction déterminée (Oy).

2. Miroir déformable selon la revendication 1, caractérisé en ce que les appuis réglables sont constitués par des vis (26, 28) logées dans des filetages du fond plat (12) du boîtier (10).

3. Installation laser comportant une source émettrice d'un faisceau laser (2) et une tête de focalisation munie d'un miroir déformable (6) focalisant ce faisceau laser (2), caractérisée en ce que ledit miroir déformable est réalisé selon la revendication 1, les appuis (26, 28) étant réglés de façon à ce que le disque (14) ait une courbure circulaire suivant chacune des poutrelles (24) et selon ladite direction (Ox), permettant d'obtenir une zone focale (44) rectiligne, et que dans une direction (Oy) perpendiculaire à ladite première direction (Ox), les appuis (26, 28) sont réglés de façon à ce que le disque (14) ait localement au moins une contre-courbure permettant de redistribuer la concentration d'énergie du faisceau laser focalisé par le miroir.

4. Installation laser selon la revendication 3, caractérisée en ce que ladite contre-courbure est localisée au centre du disque (14) pour un faisceau de répartition gaussienne et en ce que la concentration d'énergie redistribuée par le miroir déformable est constante.

5. Installation laser comportant une source émettrice d'un faisceau laser (2) et une tête de focalisation munie d'un miroir déformable focalisant ce faisceau laser, caractérisée en ce que ledit miroir est un miroir selon la revendication 1 et en ce qu'il a une courbure circulaire selon une direction déterminée (Ox) permettant d'obtenir une zone focale (44) rectiligne et qu'il présente selon la direction (Oy) perpendiculaire à ladite direction (Ox) une contre-courbure permettant de redistribuer la concentration d'énergie du faisceau laser focalisé par le miroir.

## Claims

1. Deformable mirror formed by a thin reflecting disk (14) tightly bearing on one edge of a case (10) forming a flat bottom (12) for defining a closed volume (20), means being provided in said closed volume (20) for creating a vacuum, the case (10) being provided with supports (26, 28), whose height can be regulated relative to the flat bottom (12) and making it possible to control the curvature of the disk (14), said curvature resulting from the combined action of the vacuum and the regulation of said regulatable supports, said supports (26, 28) being aligned in parallel rows of at least three supports in a first given direction (Ox), characterized in that at least one deformable beam (24) is interposed between said disk (14) and each row of supports, in order to produce a cylindrical deformation of the mirror leading to the formation of a rectilinear focal spot (44) in a second given direction (Oy).

2. Deformable mirror according to claim 1, characterized in that the regulatable supports are constituted by screws (26, 28) located in threads of the flat bottom (12) of the case (10).

3. Laser installation incorporating a source emitting a laser beam (2) and a focusing head equipped with a deformable mirror (6) focusing said laser beam (2), characterized in that said deformable mirror is produced in accordance with claim 1, the supports (26, 28) being regulated in such a way that the disk (14) has a circular curvature along each of the beams (24) and in the direction (Ox), making it possible to obtain a rectilinear focal zone (44) and in that in a direction (Oy) perpendicular to said first direction (Ox), the supports (26, 28) are regulated in such a way that the disk (14) locally has at least one counter-curvature making it possible to redistribute the energy concentration of the laser beam focused by the mirror.

4. Laser installation according to claim 3, characterized in that said counter-curvature is located in the centre of the disk (14) for a beam having a Gaussian distribution and in that the energy concentration redistributed by the deformable mirror is constant.

5. Laser installation incorporating a source emitting a laser beam (2) and a focusing head equipped with a deformable mirror focusing said laser beam, characterized in that said mirror is in accordance with claim 1 and in that it has a circular curvature in a given direction (Ox) making it possible to obtain a rectilinear focal zone (44) and in that it has in the direction (Oy) perpendicular to said direction (Ox) a countercurvature making it possible to redistribute the energy concentration of the laser beam focused by the mirror.

## Ansprüche

1. Deformierbarer Spiegel aus einer dünnen, reflektierenden Scheibe (14), die sich dicht auf den Rand eines Gehäuses (10) stützt, das einen flachen Boden (12) aufweist, um ein geschlossenes Volumen (20) zu begrenzen, wobei in diesem geschlossenen Volumen (20) Vorrichtungen zum Erzeugen eines Unterdrucks vorgesehen sind, wobei das Gehäuse (10) mit in der Höhe bezüglich dem flachen Boden (12) regelbaren Stützen (26, 28) versehen ist, die ermöglichen, die Krümmung der Scheibe (14) zu kontrollieren, wobei diese Krümmung aus der gemeinsamen Wirkung des Unterdrucks und der Regelung der regelbaren Stützen resultiert, wobei die Stützen (26, 28) in parallelen Reihen zu wenigstens drei Stützen entlang einer ersten, vorgegebenen Richtung (Ox) angeordnet sind, dadurch gekennzeichnet, daß wenigstens ein deformierbarer Träger (24) zwischen der Scheibe (14) und jeder Stützreihe angeordnet ist, um eine zylindrische Verformung des Spiegels zu erzeugen, die zur Bildung eines geradlinigen Brennflecks (44) entlang einer zweiten, vorgegebenen Richtung (Oy) führt.

2. Deformierbarer Spiegel nach Anspruch 1, dadurch gekennzeichnet, daß die regelbaren Stützen aus Schrauben (26, 28) bestehen, die in Gewinden im flachen Boden (12) des Gehäuses (10) sitzen.

3. Laserinstallation mit einer Quelle eines Laserlichtbündels (2) und einem mit einem deformierbaren Spiegel (6) versehenen Fokuslerkopf, der dieses Laserlichtbündel (2) fokussiert, dadurch gekennzeichnet, daß der deformierbare Spiegel nach Anspruch 1 hergestellt wird, wobei die Stützen (26, 28) so eingeregelt werden, daß die Scheibe (14) eine kreisförmige Krümmung entlang jedes der Träger (24) und entlang der Richtung (Ox) besitzt, was erlaubt, eine geradlinige Brennzone (44) zu erhalten, und daß die Stützen (26, 28) in einer Richtung (Oy) senkrecht zur ersten Richtung (Ox) so eingeregelt sind, daß die Scheibe (14) lokal wenigstens eine Gegenkrümmung besitzt, die ermöglicht, die Energiekonzentration des durch den Spiegel fokussierten Laserlichtbündels zu verteilen.

4. Laserinstallation nach Anspruch 3, dadurch gekennzeichnet, daß die Gegenkrümmung sich in der Mitte der Scheibe (14) für eine Gaußsche Verteilung des Lichtbündels befindet und daß die von dem deformierbaren Spiegel verteilte Energiekonzentration konstant ist.

5. Laserinstallation mit einer Quelle eines Laserlichtbündels (2) und einem mit einem deformierbaren Spiegel (6) versehenen Fokussierkopf, der dieses Laserlichtbündel (2) fokussiert, dadurch gekennzeichnet, daß der deformierbare Spiegel ein Spiegel nach Anspruch 1 ist und daß er eine kreisförmige Krümmung entlang der Richtung (Ox) besitzt, was erlaubt, eine geradlinige Brennzone (44) zu erhalten, und daß er in der Richtung (Oy) senkrecht zur Richtung (Ox) eine Gegenkrümmung besitzt, die ermöglicht, die Energiekonzentration des durch den Spiegel fokussierten Laserlichtbündels zu verteilen.

FIG. 1

FIG. 4

# FIG. 2

# FIG. 3

FIG. 5

FIG. 6

ENERGIE DU FAISCEAU

FIG. 7

8